# EUROPEAN PATENT APPLICATION

(11) **EP 3 575 942 A1**
(43) Date of publication of application: **04.12.2019**
(21) Application number: 17894030.0
(22) Date of filing: 29.12.2017
(51) Int. Cl.: G06F 3/0488

(54) **DISPLAY METHOD AND MOBILE TERMINAL UTILIZING SPLIT SCREEN**

(30) Priority: 24.01.2017 CN 201710053233
(71) Applicant: Vivo Mobile Communication Co., Ltd., Dongguan, Guangdong 523860 (CN)
(72) Inventor: TAO, Hongneng, Dongguan Guangdong 523860 (CN)
(74) Representative: Conti, Marco
(86) International application number: PCT/CN2017/119853
(87) International publication number: WO 2018/137467

(57) **Abstract**

A screen-split display method and a mobile terminal are provided. The screen-split display method includes: when a first application is in a foreground running state and a second application in a background running state has received a message, judging whether the first application and the second application both support a screen-split display function; when the first application and the second application both support the screen-split display function, generating a notification message display field corresponding to the message, the notification message display field including a screen-split starting operation region where the message is supported to be displayed in a screen-split manner.

## Description

### CROSS-REFERENCE TO RELATED APPLICATION

The present application claims a priority of the Chinese patent application No.201710053233.1 filed on January 24, 2017, which is incorporated herein by reference in its entirety.

### TECHNICAL FIELD

The present disclosure relates to the field of communication technology, in particular to a screen-split display method and a mobile terminal.

### BACKGROUND

Along with the popularization of such mobile terminals as mobile phones, more and more display functions have been provided.

More and more applications have been applied to the mobile terminal, so as to facilitate our lives. When a large number of applications run in the background, a large quantity of notification messages will pop up. There is an urgent need to perform a rapid switching operation among the applications so as to read and process some important notification messages.

Currently, several mobile terminal manufacturers belonging to an Android camp have provided a screen-split display function (i.e., the mobile phone is divided into two or more screens so as to process a plurality of tasks simultaneously, e.g., reading the news while using WeChat), and Android 7.0 also supports the screen-split function at the physical layer. Predictably, more and more third-party companies will provide applications adapted to the screen-split function so as to meet the users' requirements.

For a conventional screen-split display operation, when two applications need to be displayed in a screen-split manner on a display interface, usually a window for screen-split display needs to be started through a certain operation, and then the applications to be displayed in a screen-split manner are selected. The entire procedure is complex, and it is impossible to process the numerous notification messages in time, so the user experience may be adversely affected.

### SUMMARY

An object of the present disclosure is to provide a screen-split display method and a mobile terminal, so as to simplify the screen-split display operation and process the numerous notification messages in time, thereby to improve the user experience.

In one aspect, the present disclosure provides in some embodiments a screen-split display method, including: when a first application is in a foreground running state and a second application in a background running state has received a message, judging whether the first application and the second application both support a screen-split display function; when the first application and the second application both support the screen-split display function, generating a notification message display field corresponding to the message, the notification message display field including a screen-split starting operation region where the message is supported to be displayed in a screen-split manner; and after the screen-split starting operation region has been started, displaying display information about the first application and the message received by the second application in a screen-split manner.

In another aspect, the present disclosure provides in some embodiments a mobile terminal, including: a judgment module configured to, when a first application is in a foreground running state and a second application in a background running state has received a message, judge whether the first application and the second application both support a screen-split display function; a generation module configured to, when the first application and the second application both support the screen-split display function, generate a notification message display field corresponding to the message, the notification message display field including a screen-split starting operation region where the message is supported to be displayed in a screen-split manner; and a screen-split display module configured to, after the screen-split starting operation region has been started, display display information about the first application and the message received by the second application in a screen-split manner.

According to the embodiments of the present disclosure, when the first application is in the foreground running state, the second application in the background running state has received the message and the first application and the second application both support the screen-split display function, the notification message display field corresponding to the message may be generated. After the screen-split starting operation region has been started, the display information about the first application and the message received by the second application may be displayed in a screen-split manner. As a result, it is able to broaden a scenario for the screen-split display function, enable a user to achieve the screen-split display function rapidly in accordance with the notification message, i.e., to rapidly trigger the screen-split display function, and process the notification messages in time, thereby to facilitate the operation.

### BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
Fig.1 is a flow chart of a screen-split display method according to one embodiment of the present disclosure;
Fig.2 is another flow chart of the screen-split display method according to one embodiment of the present disclosure;
Fig.3 is yet another flow chart of the screen-split display method according to one embodiment of the present disclosure;
Fig.4a is a schematic view showing a first application in a foreground running state according to one embodiment of the present disclosure;
Fig.4b is a schematic view showing a situation where a notification message display field is displayed on a current display interface for display information about the first application according to one embodiment of the present disclosure;
Fig.4c is a schematic view showing a situation where the display information about the first application and a message content of the second application are displayed in a screen-split manner according to one embodiment of the present disclosure;
Fig.5a is a schematic view showing a situation where the display field is displayed as a floating icon on the current display interface for the display information about the first application according to one embodiment of the present disclosure;
Fig.5b is a schematic view showing a situation where a screen-split display function is triggered when the floating icon is pressed at a pressure greater than a first predetermined value according to one embodiment of the present disclosure;
Fig.6 is a schematic view showing a situation where the message content is displayed when the floating icon is pressed at a pressure greater than a second predetermined value and smaller than the first predetermined value according to one embodiment of the present disclosure;
Fig.7 is a structure block diagram showing a mobile terminal according to a fourth embodiment of the present disclosure;
Fig.8 is another structure block diagram showing the mobile terminal according to the fourth embodiment of the present disclosure;
Fig.9 is yet another structure block diagram showing the mobile terminal according to a fifth embodiment of the present disclosure; and
Fig. 10 is still yet another structure block diagram showing the mobile terminal according to a sixth embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

### First Embodiment

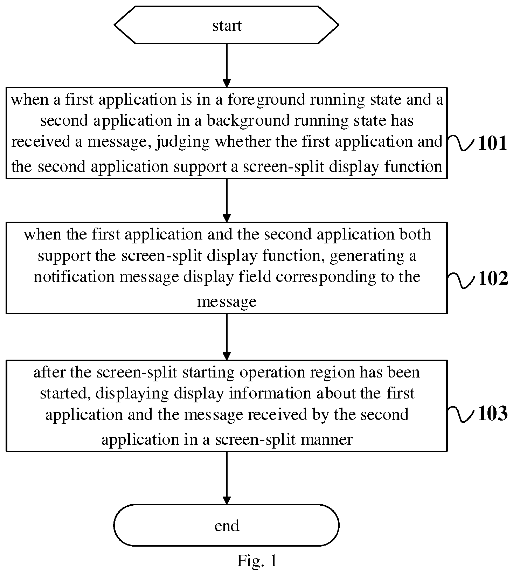

The present disclosure provides in this embodiment a screen-split display method which, as shown in Fig.1, includes the following steps.

Step 101: when a first application is in a foreground running state and a second application in a background running state has received a message, judging whether the first application and the second application both support a screen-split display function.

When the first application is in the foreground running state, the first application may run in a window on a display interface, i.e., it may directly interact with a user. At this time, when there is any other application in the background running state, the application may be in a running state where system resources may be occupied by the application but the application is not displayed on the display interface. When the second application in the background running state has received the message, a system needs to respond to this message, and generate a message notification in accordance with the message. In this embodiment, it is necessary to judge whether the first application and the second application support the screen-split display function, so as to process the message received by the second application.

Step 102: when the first application and the second application both support the screen-split display function, generating a notification message display field corresponding to the message.

The notification message display field may include a screen-split starting operation region where the message is supported to be displayed in a screen-split manner.

Through the screen-split starting operation region where the message is supported to be displayed in a screen-split manner, it is able for a user to trigger the screen-split display function, thereby to facilitate the operation.

Operating privileges of the first application and the second application may be read, so as to judge whether the first application and the second application both support the screen-split display function. The notification message may be displayed in the display field, so as to prompt the user of a new message in the second application. When the first application and the second application both support the screen-split display function, the notification message display field including the screen-split starting operation region may be generated, so as to facilitate the screen-split display. In this procedure, the starting of the screen-split function may be integrated into the message notification. For any application which supports the screen-split display function, when a message is received by the application in the background running state, the user may be prompted in the notification message display field to view the message in a screen-split manner.

The notification message display field may further include a preview region for the message received by the second application. Apart from the screen-split starting operation region, the notification message display field may also provide the preview region so as to facilitate the user to preview the message. In this way, it is able to achieve the screen-split display function while providing message preview, thereby to improve the user experience.

Correspondingly, when a judgment result is negative, i.e., any of the first application and the second application does not support the screen-split display function, the notification message display field corresponding to the message may be generated, and the display field may not include the screen-split starting operation region where the message is supported to be displayed in a screen-split manner. Instead, the display field may include same display contents as those for a common display field, e.g., a message preview region and a corresponding icon display region.

After the generation of the notification message display field corresponding to the message, the display field may be displayed in a drop-down bar, a pull-up bar or a hidden sidebar, so as to facilitate the user to view and trigger the corresponding operation.

Step 103: after the screen-split starting operation region has been started, displaying display information about the first application and the message received by the second application in a screen-split manner.

When the screen-split starting operation region of the generated notification message display field has been triggered by a user, the display information about the first application and the message received by the second application may be displayed in predetermined regions of a display screen respectively. In this way, it is able to simplify a screen-split operation procedure, thereby to enable the user to view the message for the application in the background running state in time.

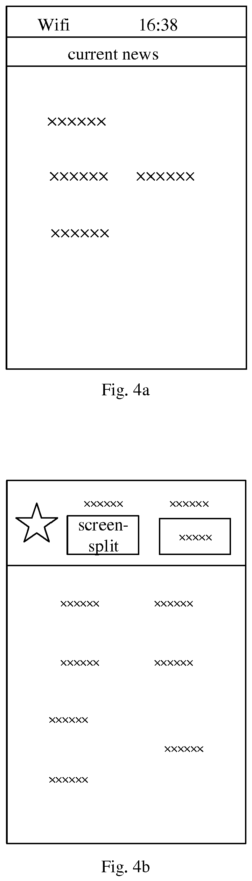

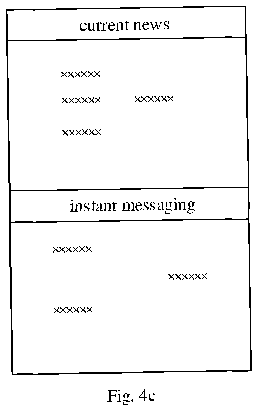

For example, as shown in Fig.4a, when the first application in the foreground running state is a current news application, the second application in the background running state is an instant messaging application and a new message has been received by the instant messaging application from a friend, whether the current news application and the instant messaging application both support the screen-split display function may be judged. When the two both support the screen-split display function, as shown in Fig.4b, the notification message display field may be generated and displayed in a floating status field on the current display interface for the display information about the first application (it may displayed at an upper portion of the current display interface). The display field may be provided with the screen-split starting operation region. The status field may be, for example, a drop-down bar commonly used in a mobile phone. When the drop-down bar is dropped down by the user so as to operate the screen-split starting operation region of the display field to trigger the screen-split display function, as shown in Fig.4c, the display information about the first application and the message received by the second application may be displayed in a screen-split manner.

According to the screen-split display method in the first embodiment of the present disclosure, when the first application is in the foreground running state, the second application in the background running state has received the message and the first application and the second application both support the screen-split display function, the notification message display field corresponding to the message may be generated. After the screen-split starting operation region has been started, the display information about the first application and the message received by the second application may be displayed in a screen-split manner. As a result, it is able to broaden a scenario for the screen-split display function, enable the user to achieve the screen-split display function rapidly in accordance with the notification message, i.e., to rapidly trigger the screen-split display function, and process the notification messages in time, thereby to facilitate the operation and improve the user experience.

### Second Embodiment

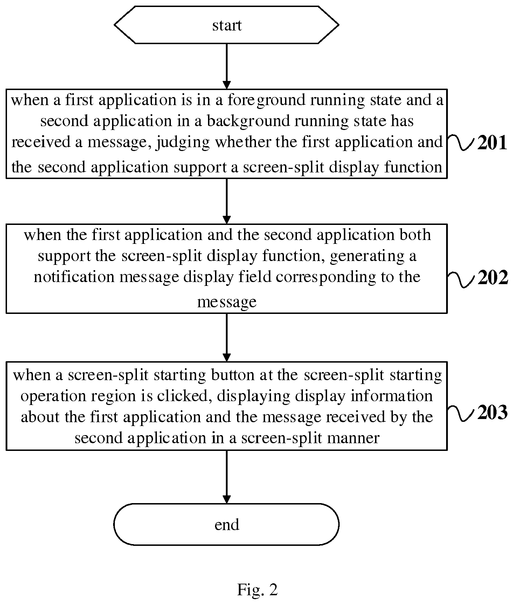

The present disclosure further provides in this embodiment a screen-split display method which, as shown in Fig.2, includes the following steps.

Step 201: when a first application is in a foreground running state and a second application in a background running state has received a message, judging whether the first application and the second application support a screen-split display function.

When the first application is in the foreground running state, the first application may run in a window on a display interface, i.e., it may directly interact with a user. At this time, when there is any other application in the background running state, the application may be in a running state where system resources may be occupied by the application but the application is not displayed on the display interface. When the second application in the background running state has received the message, a system needs to respond to this message, and generate a message notification in accordance with the message. In this embodiment, it is necessary to judge whether the first application and the second application support the screen-split display function, so as to process the message received by the second application.

Step 202: when the first application and the second application both support the screen-split display function, generating a notification message display field corresponding to the message.

The notification message display field may include a screen-split starting operation region where the message is supported to be displayed in a screen-split manner.

Through the screen-split starting operation region where the message is supported to be displayed in a screen-split manner, it is able for a user to trigger the screen-split display function, thereby to facilitate the operation.

Operating privileges of the first application and the second application may be read, so as to judge whether the first application and the second application both support the screen-split display function. The notification message may be displayed in the display field, so as to prompt the user of a new message in the second application. When the first application and the second application both support the screen-split display function, the notification message display field including the screen-split starting operation region may be generated, so as to facilitate the screen-split display. In this procedure, the starting of the screen-split function may be integrated into the message notification. For any application which supports the screen-split display function, when a message is received by the application in the background running state, the user may be prompted in the notification message display field to view the message in a screen-split manner.

Step 203: when a screen-split starting button at the screen-split starting operation region is clicked, displaying display information about the first application and the message received by the second application in a screen-split manner.

In this step, the screen-split starting button may be provided at the screen-split starting operation region of the notification message display field, and a user may operate, e.g., click, the screen-split starting button so as to conveniently trigger a screen-split display region. When the screen-split starting operation region of the generated notification message display field is triggered by the user, the display information about the first application and the message received by the second application may be displayed in predetermined regions on a display panel respectively. In this way, it is able to simplify the screen-split operation, thereby to enable the user to view the message received by the application in the background running state in time.

The notification message display field may be displayed in a floating status field on a current display interface for the display information about the first application, and the screen-split starting operation region of the display field may be provided with the screen-split starting button. The status field may be, for example, a drop-down bar commonly used in a mobile phone. When the drop-down bar is dropped down by the user and the screen-split starting button in the display field is clicked so as to trigger the screen-split display function, the display information about the first application and the message received by the second application may be displayed in a screen-split manner. In other words, in a notification bar, the notification message display field corresponding to the message received by the second application may be provided with the screen-split starting button. When the notification message display field includes a message preview region, the user may preview the message and determine whether to perform the screen-split operation. When the user wants to view and process the message in a screen-split manner, the user may click the screen-split starting button and start the screen-split display function, so as to view and respond to the message.

The screen-split display method may further include, after a region of the display field beyond the screen-split starting operation region has been clicked, enabling the second application to be in the foreground running state and enabling the first application to be in the background running state.

In other words, in the notification bar, the notification message display field corresponding to the message received by the second application may be provided with the screen-split starting operation region. When the user wants to view and process the message in a screen-split manner, the user may operate the screen-split starting operation region and start the screen-split display function. When the user wants to perform more operations and processings on the second application in the background running state, the user may click the region of the display field beyond the screen-split starting operation region, so as to enable the second application to be in the foreground running state, i.e., enable the second application to run in a window on the display interface, thereby to enable the second application to directly interact with the user. At this time, the first application may be in the background running state correspondingly.

According to the screen-split display method in the second embodiment of the present disclosure, when the first application is in the foreground running state, the second application in the background running state has received the message and the first application and the second application both support the screen-split display function, the notification message display field corresponding to the message may be generated. After the screen-split starting button in the screen-split starting operation region has been clicked, the display information about the first application and the message received by the second application may be displayed in a screen-split manner. As a result, it is able to broaden a scenario for the screen-split display function, enable the user to achieve the screen-split display function rapidly in accordance with the notification message, i.e., to rapidly trigger the screen-split display function, thereby to facilitate the operation.

### Third Embodiment

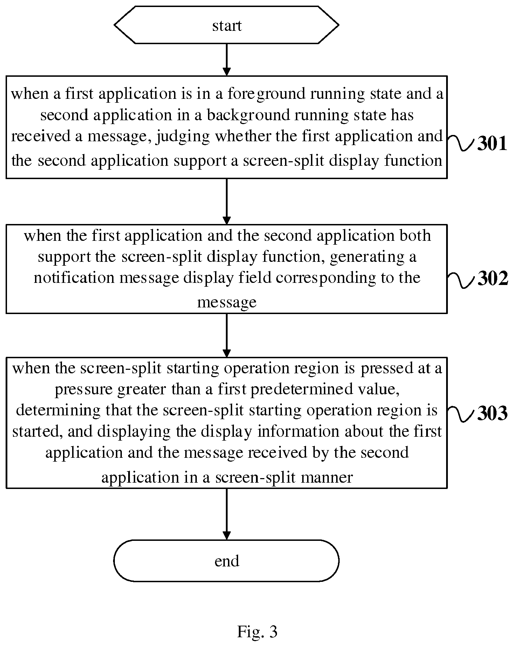

The present disclosure further provides in this embodiment a screen-split display method which, as shown in Fig.3, includes the following steps.

Step 301: when a first application is in a foreground running state and a second application in a background running state has received a message, judging whether the first application and the second application both support a screen-split display function.

When the first application is in the foreground running state, the first application may run in a window on a display interface, i.e., it may directly interact with a user. At this time, when there is any other application in the background running state, the application may be in a running state where system resources may be occupied by the application but the application is not displayed on the display interface. When the second application in the background running state has received the message, a system needs to respond to this message, and generate a message notification in accordance with the message. In this embodiment, it is necessary to judge whether the first application and the second application support the screen-split display function, so as to process the message received by the second application.

Step 302: when the first application and the second application both support the screen-split display function, generating a notification message display field corresponding to the message.

The notification message display field may include a screen-split starting operation region where the message is supported to be displayed in a screen-split manner. Through the screen-split starting operation region where the message is supported to be displayed in a screen-split manner, it is able for a user to trigger the screen-split display function, thereby to facilitate the operation.

To be specific, the notification message display field may be displayed as a floating icon on a current display interface for display information about the first application. For example, when a message has been received by an instant messaging application in the background running state, the floating icon may be directly displayed on a screen as the notification message display field, so as to visually prompt the user of a new message received by the instant messaging application. Optionally, the floating icon may be a display icon same as an icon of the second application.

Step 303: when the screen-split starting operation region is pressed at a pressure greater than a first predetermined value, determining that the screen-split starting operation region is started, and displaying the display information about the first application and the message received by the second application in a screen-split manner.

The screen-split starting operation region may be the complete, or a part of, the display field in the form of the floating icon. When the floating icon is pressed by the user at a pressure greater than a predetermined triggering value, the screen-split display function may be triggered.

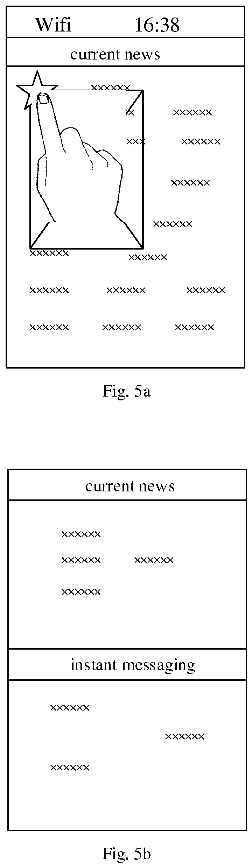

For example, when the first application in the foreground running state is a current news application, the second application in the background running state is an instant messaging application and a new message has been received by the instant messaging application from a friend, whether the current news application and the instant messaging application both support the screen-split display function may be judged. When the two both support the screen-split display function, the notification message display field may be generated. As shown in Fig.5a, the display field may be displayed as a floating icon on a current display interface for display information about the current news application. To be specific, an icon of the instant messaging application (i.e., an icon indicated by a star in Fig.5a) may be displayed as the display field, so as to prompt the user. The screen-split starting operation region may be the entire icon. When the icon is pressed by the user at a pressure greater than the first predetermined value, the screen-split display function may be triggered, and the display information about the current news application and the message received by the instant messaging application may be displayed in a screen-split manner as shown in Fig. 5b.

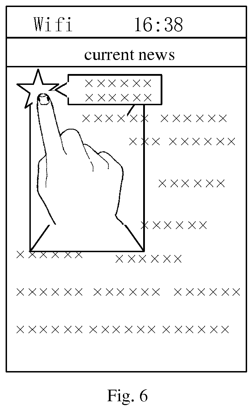

As shown in Fig.6, the screen-split display method may further include: when the screen-split starting operation region is pressed at a pressured greater than a second predetermined value and smaller than the first predetermined value, determining that the screen-split starting operation region has not been started yet; and generating a floating window where the message received by the second application is displayed, and displaying the floating window on the current display interface for the display information about the first application.

When the pressure greater than the second predetermined value and smaller than the first predetermined value is applied to the screen-split starting operation region, this pressing operation may be a slight pressing operation. As shown in Fig.6, when the floating icon (indicated by a star in Fig.6) is slightly pressed by a finger, it means that a screen-split display mode has not been started yet. At this time, the message may be previewed in response to the slight pressing operation, i.e., the message may be presented as a floating window on the current display interface for the display information about the first application.

After previewing the message, when the user wants to open the instant messaging application on the display screen in a screen-split display mode, the user may press the floating icon at a pressure greater than the first predetermined value so as to trigger the screen-split display mode, i.e., to display the display information about the current news application and the message received by the instant messaging application in a screen-split manner. In this way, it is able to achieve the screen-split display function more rapidly, and facilitate the user's operation.

To be specific, when the screen-split starting operation is pressed at a pressure greater than the second predetermined value and smaller than the first predetermined value for a duration greater than a predetermined time period, the screen-split starting operation region may be determined as not being started. In other words, when the floating icon is slightly and continuously pressed by the finger, a preview operation on the message may be triggered. At this time, the message may be presented as a floating window.

When the notification message is displayed in a display field in the form of a floating icon, a current reading or operation may not be adversely affected. When the user wants to preview the message, the user may slightly press the icon so as to display the message. After previewing the message, the user may press the icon at a pressure greater than the first predetermined value so as to achieve the screen-split display function, thereby to perform the screen-split display operation more rapidly and naturally.

According to the screen-split display method in the third embodiment of the present disclosure, when the first application is in the foreground running state, the second application in the background running state has received the message and the first application and the second application both support the screen-split display function, the notification message display field corresponding to the message may be generated. After the screen-split starting operation region has been pressed at a pressure greater than the first predetermined value, the screen-split starting operation region may be determined as being started, and the display information about the first application and the message received by the second application may be displayed in a screen-split manner. As a result, it is able to broaden a scenario for the screen-split display function, and enable the user to achieve the screen-split display function rapidly in accordance with the notification message, i.e., to rapidly trigger the screen-split display function, thereby to facilitate the operation.

### Fourth Embodiment

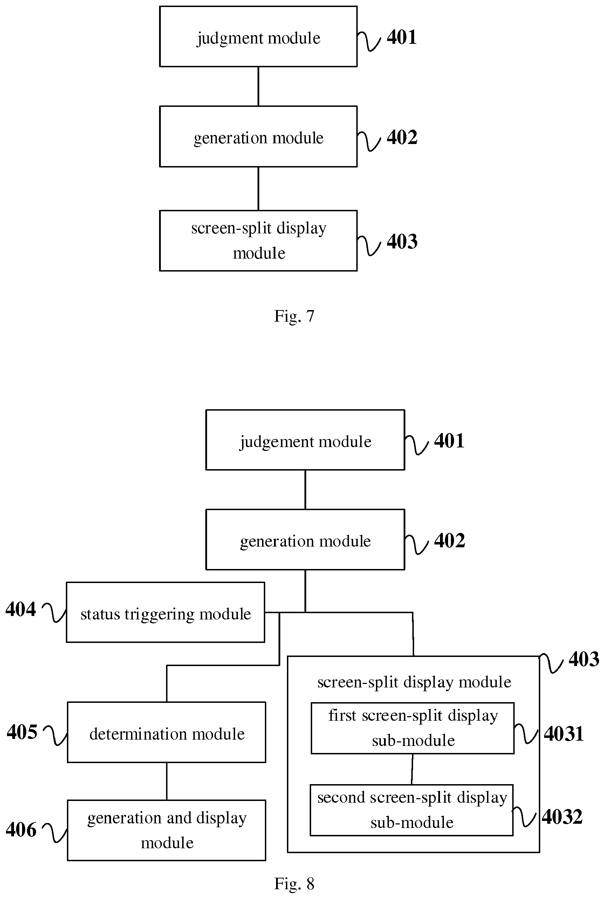

The present disclosure further provides in this embodiment a mobile terminal capable of implementing the screen-split display method in the first to third embodiments with a same beneficial effect. As shown in Figs.7 and 8, the mobile terminal includes a judgment module 401, a generation module 402 and a screen-split display module 403.

The judgment module 401 is configured to, when a first application is in a foreground running state and a second application in a background running state has received a message, judge whether the first application and the second application both support a screen-split display function.

The generation module 402 is configured to, when the first application and the second application both support the screen-split display function, generate a notification message display field corresponding to the message. The notification message display field may include a screen-split starting operation region where the message is supported to be displayed in a screen-split manner.

The screen-split display module 403 is configured to, after the screen-split starting operation region has been started, display display information about the first application and the message received by the second application in a screen-split manner.

The screen-split display module 403 may include a first screen-split display sub-module 4031 configured to, when a screen-split starting button at the screen-split starting operation region is clicked, display the display information about the first application and the message received by the second application in a screen-split manner.

The mobile terminal may further include a status triggering module 404 configured to, after a region of the display field beyond the screen-split starting operation region has been clicked, enable the second application to be in the foreground running state and enable the first application to be in the background running state.

In a possible embodiment of the present disclosure, the notification message display field may be displayed as a floating icon on a current display interface for the display information about the first application.

The screen-split display module 403 may include a second screen-split display sub-module 4032 configured to, when the screen-split starting operation region is pressed at a pressure greater than a first predetermined value, determine that the screen-split starting operation region has been started, and display the display information about the first application and the message received by the second application in a screen-split manner.

To be specific, the mobile terminal may further include a determination module 405 and a generation and display module 406. The determination module 405 is configured to, when the screen-split starting operation region is pressed at a pressured greater than a second predetermined value and smaller than the first predetermined value, determine that the screen-split starting operation region has not been started yet. The generation and display module 406 is configured to generate a floating window for displaying the message received by the second application, and display the floating window on the current display interface for the display information about the first application.

According to the mobile terminal in the fourth embodiment of the present disclosure, when the first application is in the foreground running state, the second application in the background running state has received the message and the first application and the second application both support the screen-split display function, the notification message display field corresponding to the message may be generated. After the screen-split starting operation region has been started, the display information about the first application and the message received by the second application may be displayed in a screen-split manner. As a result, it is able to broaden a scenario for the screen-split display function, enable a user to achieve the screen-split display function rapidly in accordance with the notification message, i.e., to rapidly trigger the screen-split display function, and process the notification messages in time, thereby to facilitate the operation.

### Fifth Embodiment

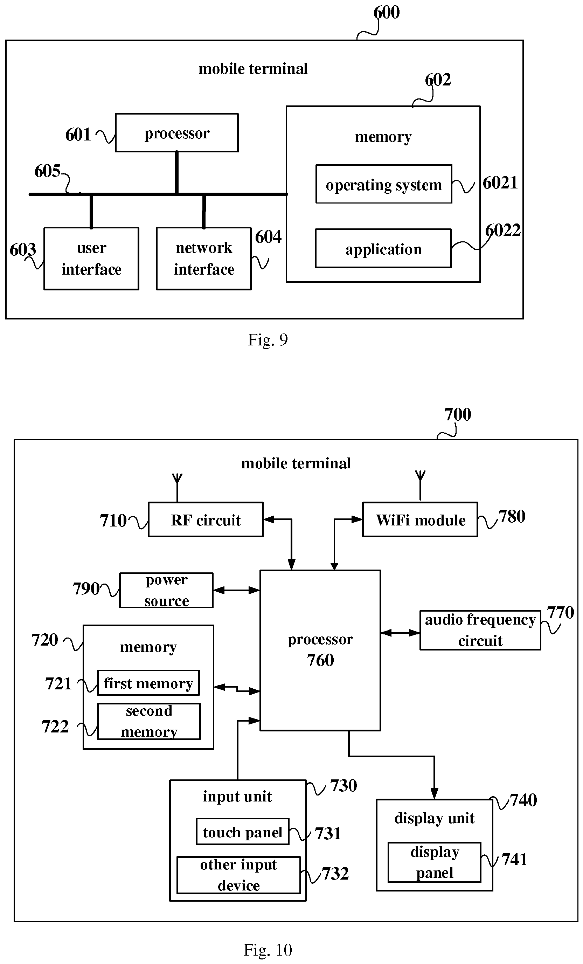

As shown in Fig.9, the present disclosure further provides in this embodiment a mobile terminal 600, including at least one processor 601, a memory 602, at least one network interface 604, a user interface 603 and a camera (not shown). The components of the mobile terminal 600 may be coupled together through a bus system 605. It should be appreciated that, the bus system 605 is configured to achieve connection and communication among the components. Apart from a data bus, the bus system 605 may further include a power source bus, a control bus and a state signal bus. For clarification, all these buses in Fig.9 may be collectedly called as bus system 605.

The user interface 603 may include a display, a keyboard or a pointing device (e.g., mouse, track ball, touch plate or touch panel).

It should be appreciated that, the memory 602 may be a volatile memory, a nonvolatile memory or both. The nonvolatile memory may be a Read-Only Memory (ROM), a Programmable ROM (PROM), an Erasable PROM (EPROM), an electrically EPROM (EEPROM) or a flash memory. The volatile memory may be a Random Access Memory (RAM) which serves as an external high-speed cache. Illustratively but nonrestrictively, the RAM may include Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory 602 intends to include, but not limited to, the above-mentioned and any other appropriate memories.

In a possible embodiment of the present disclosure, the following elements may be stored in the memory 602: an executable module or data structure, a subset or an extended set thereof, an operating system 6021 and an application 6022.

The operating system 6021 may include various system programs, e.g., a framework layer, a core layer and a driving layer, so as to implement various basic services and process hardware-based tasks. The application 6022 may include various applications, e.g., Media Player and Browser, so as to implement various application services. The programs for implementing the above-mentioned method may be included in the application 6022.

In this embodiment, through calling a program or instruction stored in the memory 602, e.g., a program or instruction stored in the application 6022, the processor 601 is configured to: when a first application is in a foreground running state and a second application in a background running state has received a message, judge whether the first application and the second application both support a screen-split display function; when the first application and the second application both support the screen-split display function, generate a notification message display field corresponding to the message, the notification message display field including a screen-split starting operation region where the message is supported to be displayed in a screen-split manner; and after the screen-split starting operation region has been started, display display information about the first application and the message received by the second application in a screen-split manner.

The above-mentioned method may be applied to, or implemented by, the processor 601. The processor 601 may be an integrated circuit (IC) having a signal processing capability. During the implementation, the steps of the above-mentioned method may be completed through an integrated logic circuit of hardware in the processor 601 or instructions in the form of software. The processor 601 may be a general-purpose processor, a digital signal processor, an application-specific integrated circuit (ASIC), a field programmable gate array (FPGA) or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a known storage medium such as an RAM, a flash memory, an ROM, a PROM, an EEPROM, or a register. The storage medium may be located in the memory 602, and the processor 601 may read information stored in the memory 602 so as to implement the steps of the method in conjunction with the hardware.

It should be appreciated that, the embodiments of the present disclosure may be implemented by hardware, software, firmware, middleware, microcode or a combination thereof. For the hardware implementation, the processor may include one or more of an ASIC, a DSP, a DSP device (DSPD), a Programmable Logic Device (PLD), an FPGA, a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

In a possible embodiment of the present disclosure, the processor 601 is further configured to, when a screen-split starting button at the screen-split starting operation region is clicked, display the display information about the first application and the message received by the second application in a screen-split manner.

In another possible embodiment of the present disclosure, the processor 601 is further configured to, after a region of the display field beyond the screen-split starting operation region has been clicked, enable the second application to be in the foreground running state and enable the first application to be in the background running state.

In a possible embodiment of the present disclosure, the processor 601 is further configured to display the notification message display field as a floating icon on a current display interface for the display information about the first application.

In a possible embodiment of the present disclosure, the processor 601 is further configured to, when the screen-split starting operation region is pressed at a pressure greater than a first predetermined value, determine that the screen-split starting operation region has been started, and display the display information about the first application and the message received by the second application in a screen-split manner.

In another possible embodiment of the present disclosure, the processor 601 is further configured to: when the screen-split starting operation region is pressed at a pressured greater than a second predetermined value and smaller than the first predetermined value, determine that the screen-split starting operation region has not been started yet; and generate a floating window for displaying the message received by the second application, and display the floating window on the current display interface for the display information about the first application.

The implementation of the mobile terminal in the fourth embodiment of the present disclosure may refer to that mentioned in the above embodiments, and thus will not be particularly defined herein.

According to the mobile terminal in the embodiment of the present disclosure, when the first application is in the foreground running state, the second application in the background running state has received the message and the first application and the second application both support the screen-split display function, the notification message display field corresponding to the message may be generated. After the screen-split starting operation region has been started, the display information about the first application and the message received by the second application may be displayed in a screen-split manner. As a result, it is able to broaden a scenario for the screen-split display function, enable a user to achieve the screen-split display function rapidly in accordance with the notification message, i.e., to rapidly trigger the screen-split display function, and process the notification messages in time, thereby to facilitate the operation.

### Sixth Embodiment

As shown in Fig.10, the present disclosure further provides in this embodiment a mobile terminal 700. The mobile terminal 700 may be a mobile phone, a flat-panel computer, a Personal Digital Assistant (PDA) or a vehicle-mounted computer.

The mobile terminal 700 includes a Radio Frequency (RF) circuit 710, a memory 720, an input unit 730, a display unit 740, a processor 760, an audio frequency circuit 770, a Wireless Fidelity (WiFi) module 780, a power source 790 and a camera (not shown).

The input unit 730 is configured to receive digital or character information inputted by a user, and generate a signal input related to user settings and function control of the mobile terminal 700. To be specific, the input unit 730 may include a touch panel 731. The touch panel 731, also called as touch screen, is configured to collect a touch operation made by the user on or in proximity to the touch panel (e.g., an operation made by the user through any appropriate object or attachment (e.g., finger or stylus) on or in the proximity to the touch panel 731). The touch panel 731 may include a touch detection unit and a touch controller. The touch detection unit is configured to detect a touch position and a signal generated due to the touch operation, and transmit the signal to the touch controller. The touch controller is configured to receive touch information from the touch detection unit, convert it into coordinates of a touch point, transmit the coordinates to the processor 760, and receive and execute a command from the processor 760. In addition, the touch panel 731 may be of a resistive type, a capacitive type, an infrared type or a surface acoustic wave (SAW) type. Apart from the touch panel 731, the input unit 730 may further include an input device 732 which may include, but not limited to, a physical keyboard, a functional button (e.g., a volume control button or an on/off button), a trackball, a mouse, and a joystick, which will not be particularly defined herein.

The display unit 740 is configured to display information inputted by the user or information to be presented to the user, and various interfaces for the mobile terminal 700, and it may include a display panel 741. In a possible embodiment of the present disclosure, the display panel 741may be a Liquid Crystal Display (LCD) panel or an Organic Light-Emitting Diode (OLED) panel.

It should be appreciated that, the touch panel 731 may cover the display panel 741, so as to form a touch display panel. When the touch operation made on or in proximity to the touch display panel has been detected, the touch information may be transmitted to the processor 760 so as to determine a type of a touch event. Then, the processor 760 may provide corresponding visual output on the touch display panel in accordance with the type of the touch event.

The touch display panel may include an application interface display region and a commonly-used controls display region. An arrangement mode of the two display regions will not be particularly defined herein, e.g., one of the two display regions may be arranged above or under the other, or arranged to the left or the right of the other. The application interface display region may be adopted to display interfaces for applications, and each interface may include an icon for at least one application and/or an interface element such as Widget desktop control. The application interface display region may also be a blank interface where no content is contained. The commonly-used controls display region may be adopted to display controls which are used frequently, e.g., setting button, interface number, scroll bar, or such application icons as telephone book icon.

The processor 760 may be a control center of the mobile terminal 700, and connected to each member of the entire cell phone via various interfaces and lines. The processor 760 is configured to run or execute software programs and/or modules stored in a first memory 721, and call data stored in a second memory 722, so as to achieve various functions of the mobile terminal 700 and process the data, thereby to monitor the mobile terminal 700. In a possible embodiment of the present disclosure, the processor 760 may include one or more processing units.

In the embodiments of the present disclosure, through calling a program or instruction stored in the first memory 721 and/or the data stored in the second memory 722, the processor 760 is configured to: when a first application is in a foreground running state and a second application in a background running state has received a message, judge whether the first application and the second application both support a screen-split display function; when the first application and the second application both support the screen-split display function, generate a notification message display field corresponding to the message, the notification message display field including a screen-split starting operation region where the message is supported to be displayed in a screen-split manner; and after the screen-split starting operation region has been started, display display information about the first application and the message received by the second application in a screen-split manner.

In a possible embodiment of the present disclosure, the processor 760 is further configured to, when a screen-split starting button at the screen-split starting operation region is clicked, display the display information about the first application and the message received by the second application in a screen-split manner.

In another possible embodiment of the present disclosure, the processor 760 is further configured to, after a region of the display field beyond the screen-split starting operation region has been clicked, enable the second application to be in the foreground running state and enable the first application to be in the background running state.

In a possible embodiment of the present disclosure, the processor 760 is further configured to display the notification message display field as a floating icon on a current display interface for the display information about the first application.

In a possible embodiment of the present disclosure, the processor 760 is further configured to, when the screen-split starting operation region is pressed at a pressure greater than a first predetermined value, determine that the screen-split starting operation region has been started, and display the display information about the first application and the message received by the second application in a screen-split manner.

In another possible embodiment of the present disclosure, the processor 760 is further configured to: when the screen-split starting operation region is pressed at a pressured greater than a second predetermined value and smaller than the first predetermined value, determine that the screen-split starting operation region has not been started yet; and generate a floating window for displaying the message received by the second application, and display the floating window on the current display interface for the display information about the first application.

The implementation of the mobile terminal in the fourth embodiment of the present disclosure may refer to that mentioned in the above embodiments, and thus will not be particularly defined herein.

According to the mobile terminal in the embodiment of the present disclosure, when the first application is in the foreground running state, the second application in the background running state has received the message and the first application and the second application both support the screen-split display function, the notification message display field corresponding to the message may be generated. After the screen-split starting operation region has been started, the display information about the first application and the message received by the second application may be displayed in a screen-split manner. As a result, it is able to broaden a scenario for the screen-split display function, enable a user to achieve the screen-split display function rapidly in accordance with the notification message, i.e., to rapidly trigger the screen-split display function, and process the notification messages in time, thereby to facilitate the operation.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, device and units described hereinabove may refer to the corresponding procedures in the method embodiment, and thus will not be particularly defined herein.

It should be further appreciated that, the device and method may be implemented in any other ways. For example, the embodiments for the apparatus is merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

The units may be, or may not be, physically separated from each other. The units for displaying may be, or may not be, physical units, i.e., they may be arranged at an identical position, or distributed on a plurality of network elements. Parts or all of the units may be selected in accordance with the practical need, so as to achieve the purpose of the present disclosure.

In addition, the functional units in the embodiments of the present disclosure may be integrated into a processing unit, or the functional units may exist independently, or two or more functional units may be combined together.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The above embodiments are merely for illustrative purposes, but shall not be construed as limiting the scope of the present disclosure. Any person skilled in the art may make modifications and substitutions without departing from the spirit of the present disclosure, and these modifications and substitutions shall also fall within the scope of the present disclosure. Hence, the scope of the present disclosure shall be subject to the scope defined by the appended claims.

The above embodiments have been described in a progressive manner, and the same or similar contents in the embodiments will not be repeated, i.e., each embodiment merely focuses on the difference from the others.

Although the preferred embodiments are described above, a person skilled in the art may make modifications and alterations to these embodiments in accordance with the basic concept of the present disclosure. So, the attached claims are intended to include the preferred embodiments and all of the modifications and alterations that fall within the scope of the present disclosure.

It should be further appreciated that, such words as "first" and "second" are merely used to separate one entity or operation from another entity or operation, but are not necessarily used to represent or imply any relation or order between the entities or operations. In addition, such terms as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A screen-split display method, comprising:
judging, when a first application is in a foreground running state and a second application in a background running state has received a message, whether the first application and the second application both support a screen-split display function;
generating a notification message display field corresponding to the message when the first application and the second application both support the screen-split display function, the notification message display field comprising a screen-split starting operation region where the message is supported to be displayed in a screen-split manner; and
displaying display information about the first application and the message received by the second application in a screen-split manner after the screen-split starting operation region has been started.

2. The screen-split display method according to claim 1, wherein the displaying display information about the first application and the message received by the second application in a screen-split manner after the screen-split starting operation region has been started comprises:
displaying the display information about the first application and the message received by the second application in a screen-split manner after a screen-split starting button at the screen-split starting operation region has been clicked.

3. The screen-split display method according to claim 2, further comprising: enabling the second application to be in the foreground running state and enabling the first application to be in the background running state after a region of the display field beyond the screen-split starting operation region has been clicked.

4. The screen-split display method according to claim 1, wherein the notification message display field is displayed as a floating icon on a current display interface for the display information about the first application.

5. The screen-split display method according to claim 1 or 4, wherein the displaying display information about the first application and the message received by the second application in a screen-split manner after the screen-split starting operation region has been started comprises:
determining that the screen-split starting operation region has been started when the screen-split starting operation region is pressed at a pressure greater than a first predetermined value, and displaying the display information about the first application and the message received by the second application in a screen-split manner.

6. The screen-split display method according to claim 5, further comprising:
determining that the screen-split starting operation region has not been started yet when the screen-split starting operation region is pressed at a pressure greater than a second predetermined value and smaller than the first predetermined value; and
generating a floating window for displaying the message received by the second application, and displaying the floating window on the current display interface for the display information about the first application.

7. A mobile terminal, comprising:
a judgment module configured to, when a first application is in a foreground running state and a second application in a background running state has received a message, judge whether the first application and the second application both support a screen-split display function;
a generation module configured to, when the first application and the second application both support the screen-split display function, generate a notification message display field corresponding to the message, the notification message display field comprising a screen-split starting operation region where the message is supported to be displayed in a screen-split manner; and
a screen-split display module configured to, after the screen-split starting operation region has been started, display display information about the first application and the message received by the second application in a screen-split manner.

8. The mobile terminal according to claim 7, wherein the screen-split display module comprises a first screen-split display sub-module configured to, after a screen-split starting button at the screen-split starting operation region has been clicked, display the display information about the first application and the message received by the second application in a screen-split manner.

9. The mobile terminal according to claim 8, further comprises a status triggering module configured to, after a region of the display field beyond the screen-split starting operation region has been clicked, enable the second application to be in the foreground running state and enable the first application to be in the background running state.

10. The mobile terminal according to claim 7, wherein the notification message display field is displayed as a floating icon on a current display interface for the display information about the first application.

11. The mobile terminal according to claim 7 or 10, wherein the screen-split display module comprises a second screen-split display sub-module configured to, when the screen-split starting operation region is pressed at a pressure greater than a first predetermined value, determine that the screen-split starting operation region has been started, and display the display information about the first application and the message received by the second application in a screen-split manner.

12. The mobile terminal according to claim 11, further comprising:
a determination module configured to, when the screen-split starting operation region is pressed at a pressure greater than a second predetermined value and smaller than the first predetermined value, determine that the screen-split starting operation region has not been started yet; and
a generation and display module configured to generate a floating window for displaying the message received by the second application, and display the floating window on the current display interface for the display information about the first application.

13. A mobile terminal, comprising a processor and memory storing therein a computer program executed by the processor, wherein the processor is configured to execute the computer program so as to implement the screen-split display method according to any one of claims 1 to 6.

14. A computer-readable storage medium storing therein a computer program, wherein the computer program is executed by a processor so as to implement the screen-split display method according to any one of claims 1 to 6.
